# EUROPEAN PATENT SPECIFICATION

(11) **EP 2 935 445 B1**
(45) Date of publication and mention of the grant of the patent: **03.04.2019**
(21) Application number: 13864248.3
(22) Date of filing: 16.12.2013
(51) Int. Cl.: C09D 175/06, C08K 13/06, C08L 63/00, C08L 75/00, C08K 5/5415, C08K 7/02, C08K 9/06, C08K 9/08, C08L 75/04, C08L 75/06, C08K 3/36, C08K 5/541, C08L 83/04

(54) **COMPOSITION COMPRISING PARTICULATE FLOW AID**
ZUSAMMENSETZUNG MIT PARTIKELFÖRMIGER FLIESSHILFE
COMPOSITION COMPRENANT UN ADDITIF PARTICULAIRE D'AIDE À L'ÉCOULEMENT

(30) Priority: 21.12.2012 US 201261740472 P
(43) Date of publication of application: 28.10.2015
(73) Proprietor: 3M Innovative Properties Company, St. Paul, MN 55133-3427 (US)
(72) Inventor: SHARMA, Ambuj, Saint Paul, MN 55133-3427 (US); RATHORE, Jitendra, S., Saint Paul, MN 55133-3427 (US); JINDAL, Karan, Saint Paul, MN 55133-3427 (US)
(74) Representative: Herzog, Fiesser & Partner Patentanwälte PartG mbB
(86) International application number: PCT/US2013/075241
(87) International publication number: WO 2014/099702

(56) References cited:
- WO-A1-96/36665
- WO-A1-96/36665
- WO-A1-2004/114732
- WO-A1-2008/000917
- WO-A1-2008/000917
- WO-A1-2009/038971
- WO-A1-2009/038971
- WO-A1-2011/100289
- WO-A1-2011/100289
- WO-A1-2013/063057
- WO-A1-2014/014590
- WO-A2-2012/033995
- US-A1- 2002 052 434
- US-A1- 2013 206 273

## Description

### TECHNICAL FIELD

This invention relates to short fiber-containing resin compositions comprising particulate modifiers and, in other aspects, to articles prepared from the compositions, and to the use of the compositions in flow processes.

### BACKGROUND

US 2002/052434 discloses a method of incorporating a nanostructured chemical into a polymer, comprising the step of compounding a nanostructured chemical into the polymer. WO 2011/100289 discloses dispersions of nanoparticles in a resin component, the nanoparticles having a multimodal particle size distribution including at least a first mode and a second mode and the number average particle diameter of the particles in the first mode being greater than the number average particle size distribution in the second mode.

Composite materials (for example, fiber-containing polymer compositions) are widely used in industry due to their relatively low cost and their relatively high performance characteristics. Generally, such materials are produced by adding rigid or flexible fibers to a resin to achieve enhanced mechanical properties (for example, increased impact resistance and/or modulus) and/or thermal properties (for example, increased heat resistance) of the resulting composite upon solidification (for example, upon curing of the resin).

WO 2008/000917 discloses fiber-reinforced composites, particularly application-oriented composites useful in dental and medical applications/appliances, such as fiber reinforced dental composites, and to a method for the manufacture thereof. WO 2009/038971 discloses an erosion resistant composite article comprising a fibrous layer impregnated with an impregnating resin system comprising a curable resin and surface modified nanoparticles, wherein the surface-modified nanoparticles comprise a core, a surface, and a surface modifying agent attached to the surface; wherein the erosion resistance of the composite article when cured as measured according to the Rain Erosion Resistance Test is at least 2 times greater than the erosion resistance of the composite article absent the surface modified nanoparticles. WO 96/36665 discloses a composition comprising (a) a curable resin sol comprising a colloidal dispersion of substantially spherical, substantially inorganic microparticles in curable resin; and (b) reinforcing fibers.

Composites are usually classified as either short-fiber or continuous-fiber composites. Short-fiber composites (which often comprise chopped fibers made of glass or graphite) can be manufactured by various processes including injection molding and extrusion.

When short fibers are used in such manufacturing processes (or in other processes or applications that similarly require resin compositions to have the ability to flow), however, their relatively high aspect ratios (which can be necessary, for example, for short fibers to effectively improve mechanical properties) can result in increases in resin composition viscosity. This can make processing difficult and can also limit the amount of short fiber that can be added to the resin.

### SUMMARY

Thus, we recognize that current limitations on the use of short fibers undermine the potential of the fibers in industrial applications. We also recognize that there is an ongoing need for short fiber-containing resin compositions that can be easily processed (for example, by extrusion or injection molding) to provide short-fiber composites exhibiting useful properties (for example, useful mechanical properties such as relatively high tensile strength, as well as relatively high flexural and shear properties). We further recognize that there is an accompanying need for flow aids that can be added to short fiber-containing resin compositions to improve their flowability.

Preferably, the flow aids will be capable of reducing the viscosity of the short fiber-containing resin compositions without significantly degrading the mechanical properties of short-fiber composites prepared from the compositions (relative to corresponding composites prepared without flow aid). Ideally, the flow aids will provide sufficient viscosity reduction to enable the use of significantly higher loadings of short fibers, so as to provide short-fiber composites exhibiting enhanced mechanical properties (relative to corresponding composites prepared without flow aid and thus with a smaller loading of short fibers).

Briefly, in one aspect, this invention provides a composition comprising
(a) a resin component comprising at least one liquid resin;
(b) a reinforcing modifier comprising short fibers that are flexible have an average length that is less than or equal to 20 millimeters; and/or have an average diameter that is less than or equal to 100 micrometers; and
(c) a flow modifier comprising silsesquioxane particles having a general formula RSiO_{3/2}, wherein R is selected from non-interacting groups consisting of alkyl groups, alkylsilyl groups, and combinations thereof;
wherein the reinforcing modifier and the flow modifier are dispersed in the resin component.
The resin component preferably comprises at least one liquid resin that is a curable resin (for example, a thermosetting resin such as an epoxide resin). The short fibers can be inorganic or organic in nature.

In another aspect, the invention provides a composition comprising
(a) a resin component comprising at least one thermosetting resin;
(b) a reinforcing modifier comprising short fibers that are flexible, have an average length that is less than or equal to 20 millimeters; and/or have an average diameter that is less than or equal to 100 micrometers; and
(c) a flow modifier comprising silsesquioxane particles having a general formula RSiO_{3/2}, wherein R is alkyl groups and being free of hydroxyl groups;
wherein said reinforcing modifier and said flow modifier are dispersed in said resin component.

It has been discovered that certain silsesquioxane particles (those bearing non-interacting groups) can be effective as flow aids in flexible short fiber-containing resin compositions. Such particles can be used to reduce composition viscosity without the need for solvent or reactive diluent and, in some cases, without significantly degrading the mechanical properties (for example, the tensile strength) of short-fiber composites prepared from the compositions (relative to corresponding composites prepared without the particles). In addition, inclusion of the particles generally can enable the use of higher loadings of flexible short fibers to achieve improved mechanical performance of resulting short-fiber composites (relative to corresponding composites prepared without the particles and thus with a smaller loading of short fibers).

The composition of the invention can be used in a wide range of manufacturing processes in which composition flowability can be necessary or desirable. For example, the composition can be useful in extrusion and injection molding processes for producing structural adhesives (for use in bonding or joining methods) or surfaced or molded articles (for use in a variety of applications such as sporting goods applications).

In view of the foregoing, at least some embodiments of the composition of the invention can meet the above-described, ongoing need for short fiber-containing resin compositions that can be easily processed to provide short-fiber composites exhibiting useful properties. The particles included in the composition of the invention can meet the accompanying need for flow aids that can be added to short fiber-containing resin compositions to improve their flowability. In at least some embodiments of the composition of the invention, flowability can be improved without significantly degrading the mechanical properties of short-fiber composites prepared from the compositions, and, in at least some embodiments, the particles can provide sufficient viscosity reduction to enable the use of significantly higher loadings of short fibers (so as to provide short-fiber composites exhibiting enhanced mechanical properties).

In yet another aspect, this invention provides a flow process comprising (a) providing the above-described composition of the invention; and (b) applying sufficient force to the composition to cause the composition to flow.

### DETAILED DESCRIPTION

In the following detailed description, various sets of numerical ranges (for example, of the number of carbon atoms in a particular moiety, or of the amount of a particular component) are described, and, within each set, any lower limit of a range can be paired with any upper limit of a range. Such numerical ranges also are meant to include all numbers subsumed within the range (for example, 1 to 5 includes 1, 1.5, 2, 2.75, 3, 3.80, 4, 5, and so forth).

As used herein, the term and/or means one or all of the listed elements or a combination of any two or more of the listed elements.

The words preferred and preferably refer to embodiments of the invention that may afford certain benefits under certain circumstances. Other embodiments may also be preferred, however, under the same or other circumstances. Furthermore, the recitation of one or more preferred embodiments does not imply that other embodiments are not useful, and is not intended to exclude other embodiments from the scope of the invention.

The term comprises and variations thereof do not have a limiting meaning where these terms appear in the description and claims.

As used herein, a, an, the, at least one, and one or more are used interchangeably.

The above Summary of the Invention section is not intended to describe every embodiment or every implementation of the invention. The detailed description that follows more particularly describes illustrative embodiments. Throughout the detailed description, guidance is provided through lists of examples, which examples can be used in various combinations. In each instance, a recited list serves only as a representative group and should not be interpreted as being an exclusive list.

### Definitions

As used in this patent application:
"agglomerated" or "agglomerate" refers to an association of primary particles that is held together by forces resulting from charge or polarity including van der Waals forces and/or hydrogen bonding (for example, a relatively weak association that can be broken down into smaller entities by, for example, the shearing forces encountered during dispersion of the agglomerate(s) in a liquid);
"aggregated" or "aggregate" refers to an association of primary particles that is held together by covalent and/or ionic bonds (for example, a relatively strong association that cannot be broken down into smaller entities by, for example, the shearing forces encountered during dispersion of the aggregate(s) in a liquid);
"alkylsilyl" refers to a monovalent moiety or group comprising a silicon atom directly bonded to at least one alkyl group (for example, the moiety can be of formula -Si(R)₃₋ₚ(H)ₚ, where p is an integer of 0, 1, or 2 and R is alkyl);
"cure" means to effect polymerization and/or to effect crosslinking (as evidenced, for example, by a change in density, viscosity, modulus, color, pH, refractive index, or other physical or chemical property);
"cured" means that a sufficient number of the primary polymerizable or crosslinkable functional groups of a curable resin (for example, the epoxide groups of an epoxide resin) have been consumed through chemical reaction to enable the resin to function for its intended purpose;
"flexible" (in reference to short fibers) means (a) when the short fibers are made from a material having a Young's modulus less than 100 giga-pascals (GPa) (for example, glass, basalt, or polyethylene), the short fibers have an aspect ratio (that is, a ratio of average length to average diameter, L/D) that is greater than or equal to 150 and less than or equal to 500, and (b) when the short fibers are made from material(s) having a Young's modulus greater than or equal to 100 GPa (for example, carbon), the short fibers have an aspect ratio that is greater than or equal to 450 and less than or equal to 1200;
"heteroorganic" means an organic group or moiety (for example, an alkyl or alkylene group) containing at least one heteroatom (that is, an atom other than carbon or hydrogen; for example, silicon and/or oxygen);
"oligomer" means a molecule that comprises at least two repeat units and that has a molecular weight less than its entanglement molecular weight; such a molecule, unlike a polymer, exhibits a significant change in properties upon the removal or addition of a single repeat unit;
"polyalkylsiloxanyl" refers to a monovalent moiety or group comprising a silicon atom directly bonded to at least one alkyl group and an oxygen atom of a polyalkylsiloxane (for example, the moiety can be of formula -Si(R')(R)₂₋ₚ(H)ₚ, where p is an integer of 0 or 1, R is alkyl, and R' is a polyalkylsiloxane (that is, a polydialkylsiloxane or a polyalkyl(hydro)siloxane));
"short fibers" have an average length that is less than or equal to 20 millimeters and/or have an average diameter that is less than or equal to 100 micrometers.
"non-interacting" (in reference to particle-borne groups or moieties) means alkyl groups, alkylsilyl groups, and combinations thereof; and
"substantially free of hydroxyl groups" (in reference to hybrid organic-inorganic particles) means having less than 2 percent (preferably, less than 1 percent; more preferably, less than 0.5 percent; even more preferably, less than 0.2 percent; still more preferably, less than 0.1 percent; most preferably, less than 0.05 percent) of hydroxyl groups, as determined by Fourier Transform Infrared Spectroscopy (FTIR) by measuring any peak area observed from 3100 cm⁻¹ to 3600 cm⁻¹ and dividing it by the total peak area observed from 500 cm⁻¹ to 4000 cm⁻¹.

### Resin Component

The resin component of the composition of the invention comprises at least one liquid resin. Preferably, the resin component consists essentially of at least one liquid resin (that is, solid resin(s) can be present, provided that the resin component remains fluid). The resin component most preferably consists of at least one liquid resin.

Generally, any known or hereafter-developed liquid or liquefied (for example, by heating or melt processing) resin can be used in the composition, but, in at least some embodiments, a curable resin can be preferred. Suitable curable resins include thermally-curable, radiation-curable, moisture-curable, diffusible agent-curable resins, and combinations thereof. Useful curing mechanisms include cationic cure, anionic cure, addition cure, and free radical cure.

Preferred curable resins include thermosetting resins. Suitable thermosetting resins include epoxide resins, unsaturated polyester resins, curable imide resins (especially maleimide resins, but also including, for example, commercial K-3 polyimides (available from duPont) and polyimides having a terminal reactive group such as acetylene, diacetylene, phenylethynyl, norbornene, nadimide, or benzocyclobutane), vinyl ester resins and acrylic resins (for example, (meth)acrylic esters or amides of polyols, epoxides, and amines), bisbenzocyclobutane resins, cyanate ester resins, phenolic resins (including nitrile phenolics), urethane resins, urethane (meth)acrylate resins (as used herein, the term "(meth)acrylate" refers to an acrylate and/or a methacrylate), and combinations thereof. The resins can be utilized in the form of either monomers or prepolymers (for example, oligomers).

Preferred resins include epoxide resins, maleimide resins, cyanate ester resins, vinyl ester resins, urethane resins, and combinations thereof (more preferably, epoxide resins, vinyl ester resins, urethane resins, and combinations thereof; even more preferably, epoxide resins, urethane resins, and combinations thereof; most preferably, epoxide resins and combinations thereof). Epoxide resins are especially preferred due to their processing characteristics, high temperature properties, and environmental resistance.

Epoxide resins are well-known in the art and comprise compounds or mixtures of compounds that contain one or more epoxide groups of the structure 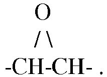 The compounds can be saturated or unsaturated, aliphatic, alicylic, aromatic, or heterocyclic, or can comprise combinations thereof. Compounds that contain more than one epoxide group (that is, polyepoxides) often can be preferred.

Polyepoxides that can be utilized in the resin component of the composition of the invention include, for example, both aliphatic and aromatic polyepoxides, but aromatic polyepoxides can be preferred for high temperature applications. The aromatic polyepoxides are compounds containing at least one aromatic ring structure (for example, a benzene ring) and more than one epoxide group. Preferred aromatic polyepoxides include the polyglycidyl ethers of polyhydric phenols (for example, bisphenol A derivative resins, epoxy cresol-novolac resins, bisphenol F derivative resins, epoxy phenol-novolac resins), glycidyl esters of aromatic carboxylic acids, glycidyl amines of aromatic amines, and combinations thereof. The most preferred aromatic polyepoxides are the polyglycidyl ethers of polyhydric phenols.

Representative examples of suitable aliphatic polyepoxides include 3',4'-epoxycyclohexylmethyl-3,4-epoxycyclohexanecarboxylate,
2-(3',4'-epoxycyclohexyl)-5,1"-spiro-3",4"-epoxycyclohexane-1,3-dioxane,
bis(3,4-epoxycyclohexylmethyl)adipate,
the diglycidyl ester of linoleic dimer acid,
1,4-bis(2,3-epoxypropoxy)butane,
4-(1,2-epoxyethyl)-1,2-epoxycyclohexane,
2,2-bis(3,4-epoxycyclohexyl)propane, polyglycidyl ethers of aliphatic polyols such as glycerol or hydrogenated 4,4'-dihydroxydiphenyl-dimethylmethane, and combinations thereof.

Representative examples of suitable aromatic polyepoxides include glycidyl esters of aromatic carboxylic acids (for example, phthalic acid diglycidyl ester, isophthalic acid diglycidyl ester, trimellitic acid triglycidyl ester, pyromellitic acid tetraglycidyl ester, and combinations thereof); N-glycidylaminobenzenes (for example, N,N-diglycidylbenzeneamine,
bis(N,N-diglycidyl-4-aminophenyl)methane,
1,3-bis(N,N-diglycidylamino)benzene,
N,N-diglycidyl-4-glycidyloxybenzeneamine, and combinations thereof); the polyglycidyl derivatives of polyhydric phenols (for example,
the polyglycidyl ethers of polyhydric phenols such as
2,2-bis-[4-hydroxyphenyl]propane, tetrakis(4-hydroxyphenyl)ethane, pyrocatechol, resorcinol, hydroquinone,
4,4'-dihydroxydiphenyl methane,
4,4'-dihydroxydiphenyl dimethyl methane,
4,4'-dihydroxy-3,3'-dimethyldiphenyl methane,
4,4'-dihydroxydiphenyl methyl methane,
4,4'-dihydroxydiphenyl cyclohexane,
4,4'-dihydroxy-3,3'-dimethyldiphenyl propane,
4,4'-dihydroxydiphenyl sulfone, and
tris-(4-hydroxyphenyl)methane); polyglycidyl ethers of novolacs (reaction products of monohydric or polyhydric phenols with aldehydes in the presence of acid catalysts), and the derivatives described in U.S. Patent Nos. 3,018,262 (Schoeder) and 3,298,998 (Coover et al.) as well as the derivatives described in the Handbook of Epoxy Resins by Lee and Neville, McGraw-Hill Book Co., New York (1967) and in Epoxy Resins, Chemistry and Technology, Second Edition, edited by C. May, Marcel Dekker, Inc., New York (1988); and combinations thereof. A preferred class of polyglycidyl ethers of polyhydric phenols are the diglycidyl ethers of bisphenol that have pendant carbocyclic groups (for example, those described in U.S. Patent No. 3,298,998 (Coover et al.)). Examples of such compounds include 2,2-bis[4-(2,3-epoxypropoxy)phenyl]norcamphane and 2,2-bis[4-(2,3-epoxypropoxy)phenyl]decahydro-1,4,5,8-dimethanonaphthalene. Preferred compounds include dicyclopentadiene-containing polyepoxides (for example, TACTIX 756 and TACTIX 556, available from Huntsman Advanced Materials Americas, Inc., Brewster, New York).

Suitable epoxide resins can be prepared by, for example, the reaction of epichlorohydrin with a polyol, as described, for example, in U.S. Patent No. 4,522,958 (Das et al.) as well as by other methods described by Lee and Neville and by May, supra. Many epoxide resins are also commercially available.

Maleimide resins suitable for use in the resin component of the composition of the invention include bismaleimides, polymaleimides, and polyaminobismaleimides. Such maleimides can be conveniently synthesized by combining maleic anhydride or substituted maleic anhydrides with di- or polyamine(s). Preferred are N,N'-bismaleimides, which can be prepared, for example, by the methods described in U.S. Patent Nos. 3,562,223 (Bargain et al.), 3,627,780 (Bonnard et al.), 3,839,358 (Bargain), and 4,468,497 (Beckley et al.) and many of which are commercially available.

Representative examples of suitable N,N'-bismaleimides include the N,N'-bismaleimides of 1,2-ethanediamine, 1,6-hexanediamine, trimethyl-1,6-hexanediamine, 1,4-benzenediamine, 4,4'-methylenebisbenzenamine, 2-methyl-1,4-benzenediamine, 3,3'-methylenebisbenzenamine, 3,3'-sulfonylbisbenzenamine, 4,4'-sulfonylbisbenzenamine, 3,3'-oxybisbenzenamine, 4,4'-oxybisbenzenamine, 4,4'-methylenebiscyclohexanamine, 1,3-benzenedimethanamine, 1,4-benzenedimethanamine, 4,4'-cyclohexanebisbenzenamine, and combinations thereof.

Co-reactants for use with the bismaleimides can include any of a wide variety of unsaturated organic compounds, particularly those having multiple unsaturation, either ethylenic, acetylenic, or both. Examples include acrylic acids and amides and the ester derivatives thereof, for example, acrylic acid, methacrylic acid, acrylamide, methacrylamide, and methylmethacrylate; dicyanoethylene; tetracyanoethylene; allyl alcohol; 2,2'-diallylbisphenol A; 2,2'-dipropenylbisphenol A; diallylphthalate; triallylisocyanurate; triallylcyanurate; N-vinyl-2-pyrrolidinone; N-vinyl caprolactam; ethylene glycol dimethacrylate; diethylene glycol dimethacrylate; trimethylolpropane triacrylate; trimethylolpropane trimethacrylate; pentaerythritol tetramethacrylate; 4-allyl-2-methoxyphenol; triallyl trimellitate; divinyl benzene; dicyclopentadienyl acrylate; dicyclopentadienyloxyethyl acrylate; 1,4-butanediol divinyl ether; 1,4-dihydroxy-2-butene; styrene; α-methyl styrene; chlorostyrene; p-phenylstyrene; p-methylstyrene; t-butylstyrene; phenyl vinyl ether; and combinations thereof. Of particular interest are resin systems employing a bismaleimide in combination with a bis(alkenylphenol). Descriptions of a typical resin system of this type can be found in U.S. Patent No. 4,100,140 (Zahir et al.). Particularly preferred components are 4,4'-bismaleimidodiphenylmethane and o,o'-diallyl bisphenol A.

Cyanate ester resins suitable for use in the resin component of the composition of the invention can be prepared by combining cyanogen chloride or bromide with an alcohol or phenol. The preparation of such resins and their use in polycyclotrimerization to produce polycyanurates are described in U.S. Patent No. 4,157,360 (Chung et al.). Representative examples of suitable cyanate ester resins include 1,2-dicyanatobenzene, 1,3-dicyanatobenzene, 1,4-dicyanatobenzene, 2,2'-dicyanatodiphenylmethane, 3,3'-dicyanatodiphenylmethane, 4,4'-dicyanatodiphenylmethane, and the dicyanates prepared from biphenol A, bisphenol F, and bisphenol S, and combinations thereof. Tri- and higher functionality cyanate ester resins also can be suitable.

Suitable vinyl ester resins for use in the resin component of the composition of the invention include the reaction products of epoxide resins with ethylenically-unsaturated monocarboxylic acids, and combinations thereof. Exemplary epoxide resins include bisphenol A diglycidyl ether (for example, Epon™ 828, available from Hexion Specialty Chemicals, Columbus, Ohio). Exemplary monocarboxylic acids include acrylic acid and methacrylic acid. Although such reaction products are acrylic or methacrylic esters, the term "vinyl ester" is used consistently in the gel coat industry. (See, for example, Handbook of Thermoset Plastics, Second Edition, William Andrew Publishing, page 122 (1998).)

Urethane resins useful in the resin component of the composition of the invention include those that can be prepared from reactants comprising one or more compounds or prepolymers that contain at least one isocyanate group and one or more compounds or prepolymers that contain at least one hydroxyl (-OH) functional group that is coreactive with an isocyanate group. Preferably, these reactants can be combined in approximately stoichiometric amounts. For example, when one mole of a triisocyanate is used, approximately three moles of a monohydroxy compound can be used.

Suitable monoisocyanates include octadecyl isocyanate, butyl isocyanate, hexyl isocyanate, phenyl isocyanate, benzyl isocyanate, naphthyl isocyanate, and combinations thereof. Suitable diisocyanates include 1,6-hexamethylene diisocyanate (HMDI), 1,4-tetramethylene diisocyanate, 2,4- and 2,6-toluene diisocyanate (TDI), diphenylmethane-4,4'-diisocyanate (MDI), cyclohexane 1,3- and 1,4-diisocyanate, isophorone diisocyanate (IPDI), 1,5- and 1,4-naphthalene diisocyanate, dicyclohexylmethane-4,4'-diisocyanate, and combinations thereof. Useful tri- and polyisocyanates include Vornate™ M220 polymeric polyisocyanate (commercially available from Dow Chemical Co., Midland, Michigan), Desmodur™ N-100, Desmodur™ N-3300 (both of which are commercially available from Bayer Chemicals, Philadelphia, PA), 4,4',4"-triphenylmethane triisocyanate, polymethylene poly(phenylisocyanate) (PMDI), and combinations thereof.

The hydroxyl-functional compound can be present as a mixture or blend of materials and can comprise monohydroxyl- and/or polyhydroxyl-containing materials. Suitable compounds include polyesters, polyethers, polythioethers, polyacetals, polycarbonates, poly(meth)acrylates, polyester amides, and combinations thereof containing one or more hydroxyl groups (for example, from 2 to 50 hydroxyl groups and having a weight average molecular weight of 50 to 50,000).

### Reinforcing Modifier

The reinforcing modifier of the composition of the invention comprises short fibers that are flexible (as defined above). Preferably, the reinforcing modifier consists essentially of flexible short fibers (that is, the reinforcing modifier can comprise other fibers, but preferably no continuous fibers are present). The reinforcing modifier most preferably consists of flexible short fibers.

Generally, any flexible short fibers suitable for use in preparing short-fiber composites can be used. Suitable fibers include both organic and inorganic fibers (preferably, inorganic fibers), many of which are commercially available.

Exemplary fibers include carbon or graphite fibers, glass fibers, ceramic fibers, boron fibers, silicon carbide fibers, basalt fibers, polymeric fibers, and combinations thereof. Useful polymeric fibers include polyimide fibers, polyamide fibers, polyethylene fibers, polypropylene fibers, and combinations thereof. Fibers of carbon, glass, polyethylene, basalt, and combinations thereof can be preferred. Such fibers can be in the form of, for example, chopped fibers.

Useful fibers can have an average length that is greater than or equal to 1 millimeter (mm), 1.5 mm, 2 mm, 2.5 mm, 3 mm, 3.5 mm, 4 mm, 4.5 mm, 5 mm, 5.5 mm, or 6 mm and less than or equal to 20 mm, 15 mm, 12.5 mm, 12 mm, 11 mm, 10 mm, 9 mm, 8 mm, or 7 mm. Preferred fibers can have an average length of 1 mm to 12.5 mm (more preferably, 2 mm to 12.5 mm; most preferably, 3 mm to 12.5 mm).

Useful fibers can have an average diameter that is greater than or equal to 3 micrometers, 4 micrometers, or 5 micrometers and less than or equal to 100 micrometers, 50 micrometers, 40 micrometers, 35 micrometers, 30 micrometers, 25 micrometers, 20 micrometers, 15 micrometers, 10 micrometers, 9 micrometers, 8 micrometers, 7 micrometers, or 6 micrometers. Preferred fibers can have an average diameter of 5 micrometers to 35 micrometers (more preferably, 5 micrometers to 30 micrometers; most preferably, 5 micrometers to 25 micrometers or 20 micrometers).

### Flow Modifier

The flow modifier of the composition of the invention comprises silsesquioxane particles having a general formula RSiO_{3/2}, wherein R is selected from non-interacting groups. As defined above, non-interacting groups include alkyl groups, alkylsilyl groups (preferably, trialkylsilyl or dialkylhydrosilyl), and combinations thereof. Preferably, at least 50 percent (more preferably, at least 60, 70, 75, or 80 percent; even more preferably, at least 90 percent; still more preferably, at least 95 percent; most preferably, at least 98 percent) of surface-borne groups are non-interacting groups (as determined by Fourier Transform Infrared Spectroscopy (FTIR) or Nuclear Magnetic Resonance (NMR)). Such groups can impart at least a degree of hydrophobicity to the particles. Preferred non-interacting groups include alkyl groups and combinations thereof; even more preferably, alkyl groups having one to four carbon atoms and combinations thereof; still more preferably, methyl, ethyl, and combinations thereof; most preferably, methyl).

Preferably, the flow modifier consists essentially of silsesquioxane particles having a general formula RSiO_{3/2}, wherein R is selected fromnon-interacting groups (that is, hybrid organic-inorganic particles bearing no non-interacting groups can be present, provided that such particles bear no groups that can participate in hydrogen bonding). The flow modifier most preferably consists of the silsesquioxane particles having a general formula RSiO_{3/2}, wherein R is selected fromnon-interacting groups.

Preferred silsesquioxane particles not only bear non-interacting groups but also bear relatively few hydroxyl groups (preferably, less than or equal to 50, 40, 30, 25, 20, 10, or 5 percent of surface-borne groups are hydroxyl). Most preferably, the particles not only bear non-interacting groups but are also substantially free of hydroxyl groups. Such particles have less than 2 percent (preferably, less than 1 percent; more preferably, less than 0.5 percent; even more preferably, less than 0.2 percent; still more preferably, less than 0.1 percent; most preferably, less than 0.05 percent) of hydroxyl groups. Hydroxyl content can be determined by Fourier Transform Infrared Spectroscopy (FTIR) by measuring any peak area observed from 3100 cm⁻¹ to 3600 cm⁻¹ and dividing it by the total peak area observed from 500 cm⁻¹ to 4000 cm⁻¹.

The particles preferably comprise nanoparticles that are agglomerated and/or aggregated (more preferably, aggregated). Useful nanoparticles include those made of a single material, as well as nanoparticles having a core comprising a first material surrounded by a shell comprising a second material that is different from the first material (core-shell nanoparticles).

Suitable nanoparticles generally can have average primary particle diameters (where "diameter" refers not only to the diameter of spherical particles but also to the longest dimension of elliptical or other non-spherical particles) ranging from 1, 10, 20, 30, 40, or 50 nanometer(s) (nm) to 100, 90, 80, 70, or 60 nm. Useful nanoparticle agglomerates or aggregates generally can have average diameters ranging from 1 micrometer to 100 micrometers (preferably, 1 micrometer to 75 micrometers; more preferably, 1 micrometer to 50 micrometers; even more preferably, 1 micrometer to 25 micrometers; most preferably, 1 micrometer to 10 micrometers).

A class of particles that can be preferred for use as flow modifiers in the composition of the invention includes silsesquioxane particles that bear non-interacting groups, that are substantially free of hydroxyl groups, and that at least a portion of which have an average particle diameter of less than 100 micrometers. Silsesquioxane is an organic and inorganic hybrid that can be represented by the general formula RSiO_{3/2,} wherein R represents an organic group or moiety. The organic group, R, is chosen to comprise a non-interacting group (as described above) to provide particles for use as flow modifiers.

Such particles can be preferably prepared by a one-step process comprising providing a solution of a water soluble base and a polyhydrosiloxane and allowing or inducing the reaction of the polyhydrosiloxane with the water soluble base in the solution. The particles and their preparation are described in detail in U.S. Patent Application No. 61/666019 (Rathore et al.), filed on June 29, 2012.

Polyhydrosiloxanes suitable for use in such preparative methods include those of the following formula: 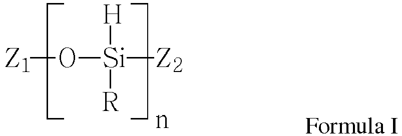 where Z₁ and Z₂ are endgroups; n is an integer greater than 2; and R comprises a substantially non-interacting group (preferably, R is an alkyl group). The endgroups of Formula I are derived from the starting materials used to make the polyhydrosiloxane, are not particularly limited, and can include, for example, an alkylated (linear, cyclic or branched) silane. Exemplary endgroups include:
- Si(CH₃)₃, -Si(CH₃)₂H, -Si(CH₃)H₂, -Si(CH₂CH₃)₃, -Si(CH₂CH₂CH₂CH₃)₃, -Si(C(CH₃)₃)₃,
- Si(CH₂CH(CH₃)CH₃)₃, and -Si(CH(CH₃)CH₂CH₃)₃. The polyhydrosiloxanes comprise repeating units, wherein n is at least 2, 4, 5, 6, 8, 10, 25, 50, 75, 100, 150, or even 200; and at most 1000, 2500, 5000, 7500, 10000, or even 15000.

Representative examples of useful polyhydrosiloxanes include: polymethylhydrosiloxane, polyethylhydrosiloxane, polypropylhydrosiloxane, polybutylhydrosiloxane, methylhydrogen cyclosiloxane, polypentylhydrosiloxane, polyhexylhydrosiloxane, and combinations thereof. The polyhydrosiloxanes can have a weight average molecular weight of at least 500, 1000, 1500, 1800, 2000, 2400, or even 2500 grams/mole; and at most 5000, 10000, 15000, 20000, 25000, 30000, or even 60000 grams/mole.

In preparing the particles, the polyhydrosiloxane is contacted with a water soluble base. As used herein, a water soluble base has a solubility in water of more than 1, 10, 20, 30, 50, 75, 100 or even 200 g per 100 mL when measured at ambient conditions (for example, 23°C and atmospheric pressure). Such water soluble bases include salts of silicates (for example, sodium metasilicate, sodium orthosilicate, sodium trimethylsilanolate, lithium metasilicate, and sodium hexafluorosilicate); hydroxyl bases (for example, sodium hydroxide, ammonium hydroxide, calcium hydroxide, and lithium hydroxide); Lewis bases (for example, ammonia and primary, secondary, and tertiary amines); pyridines; and combinations thereof.

The water soluble base generally can be added at a mass ratio of water soluble base to polyhydrosiloxane of at least 1:0.1, 1:0.5, 1:1, 1:2, 1:3, 1:4, 1:5, 1:6, 1:8, 1:10, 1:15, 1:20, 1:25, 1:30, 1:40, 1:50, or even 1:75. The polyhydrosiloxane and the water soluble base can be contacted in any known fashion. The polyhydrosiloxane can be contacted with the water soluble base in a batch-wise fashion, or the polyhydrosiloxane can be continuously added (for example, slowly added over a certain time period) to the water soluble base or vice versa. It can be preferable to stir and/or agitate the reaction mixture when contacting and/or after contacting the polyhydrosiloxane and the water soluble base. Any suitable stirring or agitating method can be used to increase contact (and thus, the reaction kinetics) of the polyhydrosiloxane and the water soluble base.

It can be preferred to have both the water soluble base and the polyhydrosiloxane in solution to improve reaction kinetics. Since the polyhydrosiloxane is generally not water soluble, a polar organic solvent can be used in the reaction mixture. Useful solvents include acetone, methyl ethyl ketone, methyl isobutyl ketone, diethyl ethers, acetonitrile, tetrahydrofuran, ethyl acetate, 1,4- dioxane, and combinations thereof. If desired, water can be mixed with one or more polar organic solvents for use in the preparation process.

Small amounts of other components can be present in the reaction mixture, so long as silsequioxane particles are generated having the desired properties (for example, amount of hydroxyl present). The reaction of the polyhydrosiloxane and the base can be conducted at a temperature of at least 20, 25, 30, 40, 50, 60, 65, or even 70°C; and at most 80, 100, 120, 150, 200, or even 250 °C. Although the reaction can be conducted at ambient temperatures, it can be preferable to add heat to shorten the reaction time. Generally, the temperature of the reaction mixture can be controlled so as not to boil away the solution. The temperatures used to make the particles often can be lower than those typically used for making conventional hydrophobic silica particles.

After making the silsesquioxane particles, the reaction mixture can be filtered, washed, and/or dried to collect and/or purify the particles. The particles can be isolated from the reaction mixture prior to drying or can be dried directly from the reaction mixture. Any suitable method can be used for isolation (for example, filtration or centrifugation).

The reaction mixture comprising the silsesquioxane particles can be dried to form a powder. The drying of the particles can be done in any suitable manner. For example, spray drying, lyophilization, exhaust oven drying, and/or solvent drying can be used. When drying in an oven, typically the drying temperature will be at least 40, 50, 70, 80 or even 90°C; and at most 120, 140, 150, 180, or even 200°C.

The particles can be washed prior to or after isolation and/or drying. Washing the particles can be performed using a suitable washing solvent, such as water, a water-miscible organic solvent, a water immiscible organic solvent, or a combination thereof. The washing solvent can be added to the reaction mixture and the resulting mixture suitably mixed, followed by filtration, centrifugation, or drying to isolate the washed particles. Alternatively, the particles can be isolated from the reaction mixture prior to washing. The washed particles can be further washed with additional washing steps followed by additional filtration, centrifugation, and/or drying steps.

The resulting silsesquioxane particles can be substantially spherical in primary particle shape. As used herein, substantially spherical means that the particles generally appear to be spherical or elliptical in shape (that is, not appearing to have an edge or corner).

The resulting particles can have a particle size that is dependent, at least in part, on the size (or length) of the polyhydrosiloxane polymer used as a starting material. Generally the higher molecular weight of the polyhydrosiloxane, the larger the particles. The rate of agitation, the rate of addition of reactants, the temperature, and/or the ratio of water soluble base to polyhydrosiloxane can also impact the particle size. The size of the particles can be determined by any suitable method, as is known in the art, such as dynamic light scattering or scanning electron microscopy.

The silsesquioxane particles can preferably have an average diameter (where "diameter" refers not only to the diameter of spherical particles but also to the longest dimension of elliptical or other non-spherical particles) of less than or equal to 100 micrometers (µm), 50 µm, 25 µm, 10 µm, 1 µm, 100 nm, or even 10 nm; and more than 0.5 nm, 1 nm, 2 nm, or even 5 nm. The particles preferably can be relatively uniform in size, having a relatively narrow size distribution (for example, 90 percent of the particles fall within 25, 20, 15, 10 or even 5 percent of the mean). Different batches of particles can be mixed together to generate bimodal or broader size distributions, if desired.

The silsesquioxane particles typically and preferably can be aggregated, wherein the substantially spherical primary particles are bonded together to form aggregates. Typically, the primary particles can be catenated (that is, bonded together to form a string of particles). For example, the primary particles can be covalently bonded together through the reaction of a polymer chain in each of two primary particles. Such aggregates can comprise at least two individual substantially spherical particles. When the silsesquioxane particles comprise aggregates of primary nanoparticle-sized particles, then the maximum cross-sectional dimension of the aggregate can be greater than 10 nm, 100 nm, 200 nm, 500 nm, or even 1000 nm.

The silsesquioxane particles can preferably have a high surface area (for example, at least 50, 200, 400 or even 500 m²/g; and at most 1000, 1200, 1400, 1500, or even 1800 m²/g based on BET (Brunaue Emmet Teller method) nitrogen adsorption). The particles can be thermally stable (for example, meaning that they can be heated to temperatures of at least 120, 130, 140, 150, 160, 170, 180, or even 200°C; and at most 250, 275, 300,. 325, 350, 400, 500, 600, 700, or even 800°C and achieve less than 15 percent weight loss). The particles can be relatively hard (for example, having a hardness of at least 0.5, 0.6, 0.7, 0.8, or even 0.9 GPa (gigaPascal); and at most 1.0, 1.1, 1.2, 1.3, 1.4, or even 1.5 GPa).

In traditional preparations of hydrophobic silica or silica-like particles, silica particles are either used as a seed upon which to grow an outer hydrophobic layer, or the outer surface of the silica particles is functionalized with compounds comprising a hydrophobic moiety. The above-described process for producing preferred silsesquioxane particles does not start with pre-formed particles, but rather is a one-step preparative method.

The preferred silsequioxane particles generally can be substantially free or even free of hydroxyl groups (-OH). The amount of hydroxyl can be determined by titration of these groups or by Fourier Transform Infrared Spectroscopy (FTIR).

### Other Components

The composition of the invention can further comprise one or more additives including, for example, soluble thermoplastic additives (for example, to further modify viscosity or rheology to ensure a handleable film); curing agents; cure accelerators; catalysts; crosslinking agents; dyes; flame retardants; pigments; other flow control agents; other reinforcing fillers, fibers, or particles (including calcium carbonate, barium sulfate, and glass beads); electrically or thermally conductive particles; scrim or embedded carrier (for example, woven or nonwoven glass, woven or nonwoven polymeric fabrics such as those of polyamide or polyester, and metal meshes or foils such as those of aluminum or copper); and combinations thereof. The additives can be, for example, partially or wholly embedded in the composition or borne on a surface thereof. The composition itself can also be borne on a carrier (for example, a release liner).

Epoxide resins can be cured by a variety of curing agents, some of which are described (along with a method for calculating the amounts to be used) by Lee and Neville in Handbook of Epoxy Resins, McGraw-Hill, pages 36-140, New York (1967). Useful epoxide resin curing agents include polyamines such as ethylenediamine, diethylenetriamine, and aminoethylethanolamine, as well as aromatic amines such as diaminodiphenylsulfone, 9,9-bis(4-aminophenyl)fluorene, 9,9-bis(3-chloro-4-(aminophenyl)fluorene, and 9,9-bis(3-methyl-4-(aminophenyl)fluorene; hydrazides such as isophthalic dihydrazide; amides such as dicyandiamide; polycarboxylic acids such as adipic acid; acid anhydrides such as phthalic anhydride and chlorendic anhydride; polyphenols such as bisphenol A; and combinations thereof. Generally, the epoxide resin and curing agent are used in stoichiometric amounts, but the curing agent can be used in amounts ranging from 0.1 to 1.7 times the stoichiometric amount of epoxide resin.

Epoxide resin curing agents also include catalysts (for example, Lewis acids and bases; tertiary amines; thermal cationic catalysts including Brφnsted acids; anionic catalysts including imidazoles such as 4,5-diphenylimidazole; complexed Lewis acids; and photocatalysts including organometallic compounds and salts). Thermally-activated catalysts can generally be used in amounts ranging from 0.05 to 5 percent by weight, based upon the amount of epoxide resin present in the composition.

N,N'-bismaleimide resins can be cured using diamine curing agents, for example, such as those described in U.S. Patent No. 3,562,223 (Bargain et al.). Generally, from 0.2 to 0.8 moles of diamine can be used per mole of N,N'-bismaleimide. N,N'-bismaleimides can also cure by other mechanisms, for example, co-cure with aromatic olefins (such as bis-allylphenyl ether, 4,4'-bis(o-propenylphenoxy)benzophenone, and o,o'-diallyl bisphenol A) or thermal cure via a self-polymerization mechanism.

Cyanate ester resins can be cyclotrimerized by application of heat and/or by using catalysts such as zinc octoate, tin octoate, zinc stearate, tin stearate, copper acetylacetonate, and chelates of iron, cobalt, zinc, copper, manganese, and titanium with bidentate ligands such as catechol. Such catalysts can generally be used in amounts of from 0.001 to 10 parts by weight per 100 parts of cyanate ester resin.

Vinyl ester resins can be cured by known methods including free radical techniques. For example, organic peroxides and hydroperoxides can be utilized.

Urethane resins also can be cured by methods that are known in the art. For example, some urethane resins (including some commercially available materials) are moisture curable.

### Preparation of Composition

The composition of the invention can be prepared by combining components (a), (b), and (c) in essentially any order (preferably, with agitation or stirring). Components (b) and (c) preferably can be added separately or in combination to component (a) to form the composition. If desired, component (c) can be milled (for example, in a ball mill over a period of 24 hours) prior to addition (for example, in order to achieve a more uniform agglomerate or aggregate particle size).

Components (b) and (c) (the reinforcing modifier and the flow modifier, respectively) preferably can be well-dispersed in component (a) (the resin component). Solvent can be used to aid in combination and dispersion, if desired, provided that the chosen solvent is one that cannot appreciably react with or dissolve one or more components of the composition. Suitable solvents include, for example, acetone, heptane, toluene, isopropanol, and combinations thereof.

Preferably, little or no solvent is utilized. Solventless compositions can be prepared by simply combining the components with or without the use of mild heating (for example, to liquefy the resin).
In a more preferred method of forming the composition, the components are combined in a solvent-free process, wherein the resultant mixture is stirred until a relatively uniform mixture is formed.

The relative amounts of components (a), (b), and (c) can vary widely, depending upon the nature of the components and the desired properties of the curable and/or cured composition. Component (c), the flow modifier, can generally be included in the composition in a concentration of 0.1, 0.5, 1, 2, 3, 4, or 5 to 50, 40, 30, 20, or 10 weight percent, based upon one hundred parts of component (a), the resin component. Most preferably, the flow modifier is present in a concentration of 5 to 10 weight percent, based upon one hundred parts of component (a).

Component (b), the reinforcing modifier, can generally be included in the composition in a concentration of 1, 5, or 10 to 50, 40, 30, 20, or 15 weight percent, based upon one hundred parts of component (a). Useful and preferred loadings can vary, depending upon the length and flexibility characteristics of the reinforcing modifier(s). For lengths in the range of 1 mm to 10 mm, for example, the reinforcing modifier preferably can be present in a concentration of 10 to 15 weight percent, based upon one hundred parts of component (a).

Preferably, at least one thermally- or photolytically-activatable curing agent is included in the composition in order to facilitate low temperature processing. Such curing agents are preferably incorporated into the composition at temperatures lower than the activation temperature of the curing agents. Preferred curing agents include imidazoles, amides (for example, dicyandiamide), aromatic amines, modified ureas, anhydride curing agents, hydrazide curing agents, thermal cationic catalysts, anionic catalysts, photocatalysts, and combinations thereof. Most preferred are amides, hydrazides, modified ureas, aromatic amines, and combinations thereof. The further addition of a flow control agent to the composition can facilitate the achievement of desired film formation and other rheological characteristics.

In a preferred method, the composition can be formed by combining the components at elevated temperatures (for example, temperatures sufficient to melt the resin component so as to facilitate its relatively uniform mixing with the two modifiers) and then cooling the resulting combination to a temperature below the activation or melting temperature of the curing agent(s). The curing agent(s) can then be blended into the combination.

### Use and Curing of Composition

The composition of the invention can be used in various different applications. For example, the composition can be used as a structural adhesive, can be used in joining and/or surfacing methods, can be used for making short-fiber composite articles (for example, sporting goods articles made by injection molding).

The composition of the invention can be applied to at least a portion of at least one major surface of a substrate (for example, a sheet, a fiber, or a shaped object) by essentially any known or hereafter-developed application method, so as to form a variety of different coated articles. Useful application methods include, for example, coating (using roll, spray, brush, or extrusion techniques), lamination, reticulation, wet layup, vacuum lamination, troweling, and combinations thereof. Cutting techniques (for example, die cutting, Gerber cutting using a heated cutting element, and laser cutting) can also be employed to provide particular shapes prior to application. The composition can be applied in neat form or in the form of a solvent solution.

Substrates suitable for use in preparing the coated articles include those having at least one surface comprising a material that is solid and preferably substantially inert to any coating or application solvent that is used. Suitable substrates can comprise a single material or a combination of different materials and can be homogeneous or heterogeneous in nature. Useful heterogeneous substrates include coated substrates comprising a coating of a material (for example, a metal or a primer) borne on a physical support (for example, a polymeric film).

Useful substrates include those that comprise wood, glass, minerals (for example, both man-made ceramics such as concrete and naturally-occurring stones such as marble), polymers (for example, polycarbonate, polyester, and polyacrylate) including multi-layer polymeric films, metals (for example, copper, silver, gold, aluminum, iron, stainless steel, nickel, and zinc,), metal alloys, metal compounds (for example, metal oxides), leather, parchment, paper, textiles, painted surfaces, and combinations thereof. Preferred substrates include glass, minerals, wood, metals, metal alloys, metal compounds, polymers, paper, and combinations thereof (more preferably, metals, metal alloys, metal compounds, polymers, paper, and combinations thereof).

The composition of the invention can be used to make short-fiber composite articles by a variety of conventional processes (for example, resin transfer molding, injection molding, hand layup, resin infusion, vacuum-assisted resin transfer molding, and compression molding). For example, the composition can be pumped or injected into a mold (so as to at least partially fill the mold) and then cured. The resulting short-fiber composites can be well-suited for use in applications requiring tailored properties (for example, applications in the transportation, construction, and sporting goods industries).

The composition of the invention can be relatively low in viscosity and therefore readily processable (for example, by techniques that require composition flowability). The rheological and curing characteristics of the composition can be adjusted to match those required for a particular composite manufacturing process.

The composition of the invention can be cured by exposure to, for example, thermal radiation (or heat), actinic radiation, moisture, or other means (preferably, thermal radiation). Combinations of various curing means can also be used (for example, a combination of heat and actinic radiation). The preferred curing conditions will vary, depending upon the particular application and its accompanying requirements and conditions.

### EXAMPLES

Objects and advantages of this invention are further illustrated by the following examples, but the particular materials and amounts thereof recited in these examples, as well as other conditions and details, should not be construed to unduly limit this invention. These examples are merely for illustrative purposes only and are not meant to be limiting on the scope of the appended claims.

### Materials

Unless otherwise noted, all parts, percentages, ratios, etc., in the examples and in the remainder of the specification are by weight. Unless otherwise noted, all chemicals were obtained from, or are available from, chemical suppliers such as Sigma-Aldrich Chemical Company, St. Louis, MO.
- Epoxy - EPON™ 828 undiluted difunctional bisphenol A/epichlorohydrin-derived liquid epoxide resin having an epoxide equivalent weight of 185-192, available from Momentive Specialty Chemicals, Inc., Columbus, OH
- Desmodur™ XP 2406 - medium-viscosity, aliphatic polyisocyanate prepolymer based on isophorone diisocyanate, approximately 80 percent in 1-methoxypropylacetate-2, available from Bayer MaterialScience, Leverkusen, Germany
- Desmodur™ LD - low-functionality isocyanate based on hexamethylene diisocyanate (HDI), available from Bayer MaterialScience, Leverkusen, Germany
- Desmodur™ Z4470 MPA/X - aliphatic polyisocyanate based on isophorone diisocyanate (IPDI), dissolved in propylene glycol monomethyl ether acetate (MPA) and xylene (1:1), available from Bayer MaterialScience, Leverkusen, Germany
- Desmodur™ VPLS 2959 - urethane bisoxazolidine latent hardener for polyisocyanates (used as the co-reactant for polyisocyanates in one-component polyurethane systems) containing blocked amino and hydroxyl groups that are activated by atmospheric moisture, available from Bayer MaterialScience, Leverkusen, Germany
- Fiber 1 - flexible basalt short fibers (3 millimeter average length, 15 micrometer average diameter), available from Sudaglass Fiber Technology, Inc., Houston, TX
- Fiber 2 - rigid carbon short fibers (3 millimeter average length, 7 micrometer average diameter), available from TohoTenax America, Inc., Rockwood, TN
- Fiber 3 - flexible glass short fibers (6 millimeter average length, 20 micrometers average diameter), available from Fiber Glast Development Corp., Brookville, OH
- Fiber 4 - flexible polyethylene short fibers (2 millimeter average length, 20 micrometer average diameter), available from MiniFIBERS, Inc., Johnson City, TN
- Silica 1 - Aerosil™ R972 fumed silica aftertreated with dimethyldichlorosilane (believed to provide dimethylsilyl groups), average primary particle size of 16 nm, available from Evonik Degussa Corp., Parsippany, NJ
- Silica 2 - Aerosil™ R202 fumed silica aftertreated with polydimethylsiloxane (believed to provide polydimethylsiloxanyl groups), average primary particle size of 14 nm, available from Evonik Degussa Corp., Parsippany, NJ
- Silica 3 - Silicon Dioxide (CAS# 68909-20-6/7631-86-10, Product Code# SIS6962.1M3) aftertreated with hexamethyldisilazane (believed to provide trimethylsilyl groups), amorphous, average primary particle size of 20 nm, available from Gelest Inc., Morrisville, PA
- Silses - Silsesquioxane particles bearing methyl groups and being substantially free of hydroxyl groups (0.1 percent, as determined by FTIR), average primary particle size of 50 nm, prepared by the method detailed below

### Test and Preparative Methods

### Tube-Flow Test

This test measured the flow rate of a fiber-containing resin through an orifice. A tube flow viscometer similar to the one described in the book Chemical Engineering Fluid Mechanics (by Ron Darby, published by Marcel Dekker, Inc. of New York, NY (2001)) was used. The viscometer was fabricated from a metal tube 0.46 meter (18 inches) long with an inside diameter of 50 mm. One end of the tube was open, and the other end was closed with a cap having an orifice 2.6 mm in diameter and 13.5 mm long in the center of the cap. A 50 mm diameter plunger was fitted in the tube and connected to a pressurized air line to provide a constant air pressure to the plunger. Samples of resin compositions were tested under pressures of 0.172, 0.345, and/or 0.552 megaPascals (MPa) (25, 50, and/or 80 pounds per square inch (psi)). The tube was filled with a sample of a resin composition (approximately 35 grams) and specified pressure was applied to the plunger, which pushed the sample out of the orifice into a 50 mm diameter pan on a balance. A stop watch was used to measure the time required to collect 10 grams of the sample. The reported flow rate values were in grams per second and were the average of three tests for each sample.

### Preparation of Silsesquioxane Particles (Silses)

Particles were prepared essentially according to the procedure described in Example 1 of U.S. Patent Application No. 61/666019 (Rathore et al.), filed on June 29, 2012. The resulting particles comprised aggregates of primary nanoparticles having an average primary particle size of 50 nanometers (as determined by scanning electron microscopy (SEM)). The largest dimension of the aggregates was up to 10 millimeters, as determined by visual inspection. The size of the aggregates was reduced further in a ball mill. A rolling mill was used with a ceramic mill jar having a volume of 1.14 liters (0.3 gallon). The jar contained cylindrical zirconia grinding media having a diameter of 19 millimeters and a length of 19 millimeters. The particles were milled for 24 hours before use in preparing resin compositions. The size of the aggregates after milling was in the range of 1 - 10 micrometers, as determined by scanning electron microscopy and optical microscopy. The milled particles were dry and in powder form. The hydroxyl content of the particles was measured essentially by the procedure described in U.S. Patent Application No. 61/666019 (Rathore et al.), filed on June 29, 2012, and determined to be 0.1 percent.

### Examples 1- 5 and Comparative Examples C-1 - C-10

Epoxide resin compositions were prepared in approximately 30 gram batches by combining the amounts of epoxide resin, fibers, and particles in weight percent (wt %) shown in Table 1 below. The weight percentages were based on 100 parts resin (for example, for 30 grams of resin, 10 weight percent fiber means that 3 grams of fiber were added to the resin to provide a total batch size of 33 grams). The resulting compositions were hand mixed in plastic cups using a plastic spatula for 2 minutes for each composition. The cups were then capped and placed in a dual asymmetric centrifuge (DAC) mixer (SpeedMixer™ DAC 400.1 FVZ, Flack Tek Inc., Landrum, SC) operated at a speed of 2700 revolutions per minute for 2 minutes.

The resulting epoxide resin compositions were tested for flow according to the Tube Flow Method described above, and the results (flow rates at various pressures) are shown in Table 1.

### Example 11 and Comparative Examples C-12A and B

An aliphatic polycarbonate-based polyurethane resin (PUR) was prepared by mixing Desmodur XP 2406 (80.00 grams), Desmodur LD (14.64 grams), Desmodur Z4470 MPA/X (18.12 grams), and Desmodur VPLS 2959 (10.44 grams) in a 200 mL plastic cup. The cup was then capped and placed in a dual asymmetric centrifuge (DAC) mixer (SpeedMixer™ DAC 400.1 FVZ, Flack Tek Inc., Landrum, SC) operated at a speed of 1000 revolutions per minute for 1 minute.

Polyurethane resin compositions were prepared in approximately 30 gram batches by combining the amounts of polyurethane resin, fibers, and particles in weight percent (wt %) shown in Table 1 below. The weight percentages were based on 100 parts resin (for example, for 30 grams of resin, 10 weight percent fiber means that 3 grams of fiber were added to the resin to provide a total batch size of 33 grams). The resulting compositions were hand mixed in plastic cups using a plastic spatula for 2 minutes for each composition. Each cup was then capped and placed in a dual asymmetric centrifuge (DAC) mixer (SpeedMixer™ DAC 400.1 FVZ, Flack Tek Inc., Landrum, SC) operated at a speed of 2700 revolutions per minute for 2 minutes.

The resulting polyurethane resin compositions were tested for flow according to the Tube Flow Method described above, and the results (flow rates at various pressures) are shown in Table 1.

**Table 1.**

| **Example No.** | **Resin** | **Fibers (weight percent)** | | | | **Particles (weight percent)** | | | | **Pressure (MPa)** | **Flow Rate (g/sec)** |
|---|---|---|---|---|---|---|---|---|---|---|---|
| | | **Fiber 1** | **Fiber 2** | **Fiber 3** | **Fiber 4** | **Silses** | **Silica 1** | **Silica 2** | **Silica 3** | | |
| **C-1A** | Epoxy | 10 | -- | -- | -- | -- | -- | -- | -- | 0.172 | 0 |
| **C-1B** | Epoxy | 10 | -- | -- | -- | -- | -- | -- | -- | 0.345 | 0.34 |
| **1A** | Epoxy | 10 | -- | -- | -- | 1 | -- | -- | -- | 0.172 | 0.14 |
| **1B** | Epoxy | 10 | -- | -- | -- | 1 | -- | -- | -- | 0.345 | 0.35 |
| **2A** | Epoxy | 10 | -- | -- | -- | 2.5 | -- | -- | -- | 0.172 | 0.14 |
| **2B** | Epoxy | 10 | -- | -- | -- | 2.5 | -- | -- | -- | 0.345 | 0.36 |
| **3A** | Epoxy | 10 | -- | -- | -- | 5 | -- | -- | -- | 0.172 | 0.13 |
| **3B** | Epoxy | 10 | -- | -- | -- | 5 | -- | -- | -- | 0.345 | 0.34 |
| **4A** | Epoxy | 10 | -- | -- | -- | 10 | -- | -- | -- | 0.172 | 0.23 |
| **4B** | Epoxy | 10 | -- | -- | -- | 10 | -- | -- | -- | 0.345 | 0.57 |
| **C-1C** | Epoxy | 10 | -- | -- | -- | -- | 10 | -- | -- | 0.172 | 0.054 |
| **C-1D** | Epoxy | 10 | -- | -- | -- | -- | -- | 10 | -- | 0.172 | 0.027 |
| **C-2** | Epoxy | -- | 10 | -- | -- | -- | -- | -- | -- | 0.172 | 0.16 |
| **C-3** | Epoxy | -- | 10 | -- | -- | 10 | -- | -- | -- | 0.172 | 0.16 |
| **C-4** | Epoxy | -- | 10 | -- | -- | -- | 10 | -- | -- | 0.172 | 0.12 |
| **C-5** | Epoxy | -- | 10 | -- | -- | -- | -- | 10 | -- | 0.172 | 0.07 |
| **C-6** | Epoxy | -- | 10 | -- | -- | -- | -- | -- | 10 | 0.172 | 0.11 |
| **C-7** | Epoxy | -- | -- | 10 | -- | -- | -- | -- | -- | 0.552 | 0.19 |
| **5** | Epoxy | -- | -- | 10 | -- | 10 | -- | -- | -- | 0.552 | 0.22 |
| **C-8** | Epoxy | -- | -- | -- | 10 | -- | -- | -- | -- | 0.552 | 0.09 |
| **6** | Epoxy | -- | -- | -- | 10 | 10 | -- | 0 | -- | 0.552 | 0.13 |
| **C-9** | Epoxy | -- | -- | -- | 10 | -- | -- | 10 | -- | 0.552 | 0.03 |
| **C-10** | Epoxy | -- | -- | -- | 10 | -- | -- | -- | 10 | 0.552 | 0.10 |
| **11** | PUR | 10 | -- | -- | -- | 10 | -- | -- | -- | 0.172 | 0.38 |
| **C-12A** | PUR | 10 | -- | -- | -- | -- | 10 | -- | -- | 0.172 | 0.19 |
| **C-12B** | PUR | 10 | -- | -- | -- | -- | -- | -- | -- | 0.172 | 0.35 |

| | | | | | | | | | | | |
|---|---|---|---|---|---|---|---|---|---|---|---|
| Note: Double dashes in the cells indicate that none of the material was added to the composition. | | | | | | | | | | | |

It should be understood that this invention is not intended to be unduly limited by the illustrative embodiments and examples set forth herein and that such examples and embodiments are presented by way of example only, with the scope of the invention intended to be limited only by the claims set forth herein as follows.

## Claims

1. A composition comprising
(a) a resin component comprising at least one liquid resin;
(b) a reinforcing modifier comprising short fibers that are flexible, have an average length that is less than or equal to 20 millimeters; and/or have an average diameter that is less than or equal to 100 micrometers; and
(c) a flow modifier comprising silsesquioxane particles having a general formula RSiO_{3/2}, wherein R is selected from non-interacting groups consisting of alkyl groups, alkylsilyl groups, and combinations thereof;
wherein said reinforcing modifier and said flow modifier are dispersed in said resin component.

2. The composition of Claim 1, wherein said resin is a curable resin.

3. The composition of Claim 2, wherein said curable resin is a thermosetting resin.

4. The composition of Claim 3, wherein said thermosetting resin is selected from the group consisting of epoxide resins, urethane resins, and combinations thereof.

5. The composition of Claim 1 or any other of the preceding claims, wherein said short fibers are selected from glass fibers, ceramic fibers, boron fibers, silicon carbide fibers, basalt fibers, carbon fibers, polymeric fibers, and combinations thereof.

6. The composition of Claim 1 or any other of the preceding claims, wherein said non-interacting groups are methyl groups.

7. The composition of Claim 1 or any other of the preceding claims, wherein said silsesquioxane particles comprise nanoparticles that are agglomerated and/or aggregated.

8. The composition of Claim 1 or any other of the preceding claims, wherein said silsesquioxane particles are free of hydroxyl groups.

9. A composition comprising
(a) a resin component comprising at least one thermosetting resin;
(b) a reinforcing modifier comprising short fibers that are flexible, have an average length that is less than or equal to 20 millimeters; and/or have an average diameter that is less than or equal to 100 micrometers; and
(c) a flow modifier comprising silsesquioxane particles having a general formula RSiO_{3/2}, wherein R is alkyl groups and being free of hydroxyl groups;
wherein said reinforcing modifier and said flow modifier are dispersed in said resin component.

10. A flow process comprising (a) providing the composition of Claim 1 or any other of the preceding composition claims; and (b) applying sufficient force to said composition to cause said composition to flow.

## Patentansprüche

1. Zusammensetzung, umfassend
(a) einen Harzbestandteil, der mindestens ein flüssiges Harz umfasst;
(b) ein Verstärkungsmodifizierungsmittel, das kurze Fasern umfasst, die flexibel sind, eine durchschnittliche Länge aufweisen, die kleiner als oder gleich 20 Millimeter ist; und/oder einen durchschnittlichen Durchmesser von weniger als oder gleich 100 Mikrometer aufweisen; und
(c) ein Verlaufmittel, umfassend Silsesquioxaneteilchen mit einer allgemeinen Formel RSiO_{3/2}, wobei R aus nicht wechselwirkenden Gruppen, bestehend aus Alkylgruppen, Alkylsilylgruppen und Kombinationen davon, ausgewählt ist;
wobei das Verstärkungsmodifizierungsmittel und das Verlaufmittel in dem Harzbestandteil dispergiert sind.

2. Zusammensetzung nach Anspruch 1, wobei das Harz ein härtbares Harz ist.

3. Zusammensetzung nach Anspruch 2, wobei das härtbare Harz ein wärmehärtbares Harz ist.

4. Verfahren nach Anspruch 3, wobei das wärmehärtbare Harz ausgewählt ist aus der Gruppe, bestehend aus Epoxidharzen, Urethanharzen und Mischungen davon.

5. Zusammensetzung nach Anspruch 1 oder einem anderen der vorstehenden Ansprüche, wobei die kurzen Fasern aus Glasfasern, Keramikfasern, Borfasern, Siliziumcarbidfasern, Basaltfasern, Kohlenstofffasern, polymeren Fasern und Kombinationen davon ausgewählt sind.

6. Zusammensetzung nach Anspruch 1 oder einem anderen der vorstehenden Ansprüche, wobei die nicht wechselwirkenden Gruppen Methylgruppen sind.

7. Zusammensetzung nach Anspruch 1 oder einem anderen der vorstehenden Ansprüche, wobei die Silsesquioxanteilchen Nanopartikel umfassen, die agglomeriert und/oder aggregiert sind.

8. Zusammensetzung nach Anspruch 1 oder einem anderen der vorstehenden Ansprüche, wobei die Silsesquioxaneteilchen frei von Hydroxylgruppen sind.

9. Zusammensetzung, umfassend
(a) einen Harzbestandteil, der mindestens ein wärmehärtbares Harz umfasst;
(b) ein Verstärkungsmodifizierungsmittel, das kurze Fasern umfasst, die flexibel sind, eine durchschnittliche Länge aufweisen, die kleiner als oder gleich 20 Millimeter ist; und/oder einen durchschnittlichen Durchmesser von weniger als oder gleich 100 Mikrometer aufweisen; und
(c) ein Verlaufmittel, das Silsesquioxaneteilchen mit einer allgemeinen Formel RSiO_{3/2} umfasst, wobei R Alkylgruppen sind und frei von Hydroxylgruppen ist;
wobei das Verstärkungsmodifizierungsmittel und das Verlaufmittel in dem Harzbestandteil dispergiert sind.

10. Fließverfahren, umfassend (a) Bereitstellen der Zusammensetzung nach Anspruch 1 oder einem anderen der vorstehenden Ansprüche der Zusammensetzung; und (b) Anlegen einer ausreichenden Kraft an die Zusammensetzung, um zu bewirken, dass die Zusammensetzung fließt.

## Revendications

1. Composition comprenant
(a) un composant de résine comprenant au moins une résine liquide ;
(b) un modificateur de renforcement comprenant des fibres courtes qui sont flexibles, ont une longueur moyenne qui est inférieure ou égale à 20 millimètres ; et/ou ont un diamètre moyen qui est inférieur ou égal à 100 micromètres ; et
(c) un modificateur d'écoulement comprenant des particules de silsesquioxane ayant une formule générale RSiO_{3/2,} dans laquelle R est choisi parmi des groupes non interagissants constitués de groupes alkyle, de groupes alkylsilyle, et de combinaisons de ceux-ci ;
dans laquelle ledit modificateur de renforcement et ledit modificateur d'écoulement sont dispersés dans ledit composant de résine.

2. Composition selon la revendication 1, dans laquelle ladite résine est une résine durcissable.

3. Composition selon la revendication 2, dans laquelle ladite résine durcissable est une résine thermodurcissable.

4. Composition selon la revendication 3, dans laquelle ladite résine thermodurcissable est choisie dans le groupe constitué de résines époxyde, de résines uréthane et de combinaisons de celles-ci.

5. Composition selon la revendication 1 ou n'importe quelle autre des revendications précédentes, dans laquelle lesdites fibres courtes sont choisies parmi des fibres de verre, des fibres céramiques, des fibres de bore, des fibres de carbure de silicium, des fibres de basalte, des fibres de carbone, des fibres polymères et des combinaisons de celles-ci.

6. Composition selon la revendication 1 ou n'importe quelle autre des revendications précédentes, dans laquelle lesdits groupes non interagissants sont des groupes méthyle.

7. Composition selon la revendication 1 ou n'importe quelle autre des revendications précédentes, dans laquelle lesdites particules de silsesquioxane comprennent des nanoparticules qui sont agglomérées et/ou agrégées.

8. Composition selon la revendication 1 ou n'importe quelle autre des revendications précédentes, dans laquelle lesdites particules de silsesquioxane sont exemptes de groupes hydroxyle.

9. Composition comprenant
(a) un composant de résine comprenant au moins une résine thermodurcissable ;
(b) un modificateur de renforcement comprenant des fibres courtes qui sont flexibles, ont une longueur moyenne qui est inférieure ou égale à 20 millimètres ; et/ou ont un diamètre moyen qui est inférieur ou égal à 100 micromètres ; et
(c) un modificateur d'écoulement comprenant des particules de silsesquioxane ayant une formule générale RSiO_{3/2,} dans laquelle R est des groupes alkyle et est exempt de groupes hydroxyle ;
dans laquelle ledit modificateur de renforcement et ledit modificateur d'écoulement sont dispersés dans ledit composant de résine.

10. Procédé d'écoulement comprenant (a) la fourniture de la composition selon la revendication 1 ou n'importe quelle autre des revendications de composition précédentes ; et (b) l'application d'une force suffisante à ladite composition pour amener ladite composition à s'écouler.
